# EUROPEAN PATENT SPECIFICATION

(11) **EP 1 685 760 B1**
(45) Date of publication and mention of the grant of the patent: **18.02.2009**
(21) Application number: 05015948.2
(22) Date of filing: 22.07.2005
(51) Int. Cl.: A01G 9/02

(54) **Sowing vessel and method for making it**
Behälter zum Säen und Verfahren zu seiner Herstellung
Récipient pour semer et son procédé de fabrication

(30) Priority: 26.01.2005 IT MI20050105
(43) Date of publication of application: 02.08.2006
(73) Proprietor: Sadepan Chimica S.r.l., 46019 Viadana (Mantova) (IT)
(72) Inventor: Bargiacchi, Enrica, 46019 Viadana (Mantova) (IT); Costa, Gianluca, 46019 Viadana (Mantova) (IT); Foschi, Lara, 46019 Viadana (Mantova) (IT); Magni, Simone, 46019 Viadana (Mantova) (IT); Miele, Sergio, 46019 Viadana (Mantova) (IT)
(74) Representative: Cicogna, Franco

(56) References cited:
- EP-A- 1 199 291
- WO-A-20/04045271
- FR-A- 2 445 103
- GB-A- 831 622
- US-A- 2 785 969
- US-A- 3 174 940

## Description

### BACKGROUND OF THE INVENTION

The present invention relates to a sowing vessel and a method for making it.

More specifically, the present invention relates to sowing vessel, made of a biodegradable and not phytotoxic material, which can also comprise other components, and which can be used as a container or vessel for containing a substrate for growing gamic and agamic propagation plants.

As is known, for "gamic propagation plants" it is intended to refer to those plants which are sexually propagated, i.e. through the seeds thereof, whereas the agamic propagating plants are those plants which are propagated through different vegetative members, such as stolons, pipings, rhizomes, bulbs, and so on.

Many agricultural cultures are sown or reimplanted or directly planted in the field, whereas other cultures are sown or reimplanted or planted at first in a protected environment, where they spend the first portion of their life cycle, so as to arrive at the bedder or seedling step, which is then reimplanted in a field or greenhouse, for completing the production or life cycle thereof.

Modern plant breeding techniques provide to so seed or reimplant vegetative portions of plants in a suitable germinating substrate, for seeds, or root forming material or assembly, for the vegetative parts.

The above mentioned substrate is arranged in suitable containers or vessels, the so called "sowing vessel or trays", including a plurality of vessel cells having different configurations and sizes.

Thus, as said bedders or seedlings are arranged at their desired places, each bedder or seedling will be provided with a small substrate "bread" where the major part of the very small root apparatus will grow.

The latter, accordingly, will not be subjected to traumas, during the reimplantation operations, and it will quickly recover its growing, upon transferring the bedder or seedling to its definitive growing place: either a field or a production greenhouse.

Conventional sowing vessels or trays are usually made of plastics materials such as polyethylene, or mixed materials, such as paper, even of a plastics coated or waxed type, or a polylayered type, with a textile fiber and plastics materials and so on.

Of broad diffusion are the so-called foamed polystyrene sowing vessels or trays, which have the advantage of having a very small weight and being suitable for breeding systems both on a floor or on a bench, on which the sowing vessels or trays are arranged on the floor of the germinating greenhouse or in raised tanks, spaced at a level about the floor, and similar to working "benches" and being irrigated by sprinkling or aspersion from the top, both of a so-called "float system".

The wordings "float system" identifies a bedder production system, in which the foamed polystyrene vessels or trays float in a tank filled-in by water and a nutrient solution.

Thus, the bedders or seedlings will tend to project their small roots from the substrate held in the cell to the liquid medium, from which they will take water and nutrient elements.

Notwithstanding their advantages, the plastics material sowing vessels or trays and, more specifically, the foamed polystyrene sowing vessels, are affected by several drawbacks.

In fact, for phytosanitary reasons, since they may mainly transmit fungus and bacterial disease inoculating agents, it is necessary to regenerate, for each productive cycle, said sowing vessels or trays, by sending the used sowing vessels to thermodestruction processes or to a waste, since they form special waste, because their contamination by plant protection product residues.

Attempts to hygienize the sowing vessels or trays by using disinfectant steam or solutions would involve, in fact, a lot of operating difficulties, both for an insufficient result of these operations, make difficult by the volumes and shapes of the sowing vessels, both because of processing problems such as bending, breakages, an increase of the material brightness of said sowing vessels and so on.

In addition to the difficulties and costs related to the disposal off of used sowing vessels, a further problem occurs as said sowing vessels or trays are used for providing industrial culture bedders or seedlings reimplanted in full or open fields, such as tomatoes, melons, tobacco and so on.

In fact, in this case, the sowing vessels are left or arranged at the edge portions of the field, upon having reimplanted the bedders contained therein, and this will require a following expensive collection step and a further sending step to farming systems and to disposal off places.

Biodegradable sowing vessels are known for example from document US-A-3 174 940. These vessels are however fracture resistant and difficult to dispose. They release a relatively low amount of fertilizer when they are destroyed.

The number of sowing vessels or trays used for a surface of an hectare is of about 150 - 250, depending on the considered vegetable species, each sowing vessel having a size varying, in average, from 0.008 to 0.012 m³ and a density of 19 ÷ 30 kg/m³.

### SUMMARY OF THE INVENTION

Accordingly, the aim of the present invention is to provide a sowing vessel or tray overcoming the above mentioned problems affecting the prior art, related to the requirement of disposing off, by a thermodestructive or disposal off method, conventional sowing vessels or trays, while eliminating the problems and costs related to their handling, at the end of their technical-agronomical life, i.e. during a post-servicing step.

Within the scope of the above mentioned aim, a main object of the invention is to provide such a biodegradable sowing vessel or tray, which can be made with any desired configurations and size of the individual cells thereof.

Another object of the present invention is to provide such a sowing vessel or tray adapted to eliminate all the problems related to its post-servicing managing such as: collection, handling and sending to disposal off places, or related to its thermal destruction or reuse after hygienizing it, where possible.

According to one aspect of the present invention, the above mentioned aim and objects, as well as yet other objects, which will become more apparent hereinafter, are achieved by a biodegradable sowing vessel or tray with the features of claim 1, including a plurality of cells having any desired configurations and size, and formed by a methylen-urea material, with characteristics of a slowly nitrogen releasing fertilizer, or by a wood-like matrix, in which the methylen-urea material operates as a binding material.

The above mentioned sowing vessel or tray, at the end of its operating life, i.e. upon concluding its function of receiving bedders or seedlings derived from germinated seeds or vegetative portions of rooted plants, can be crushed and distributed over the soil or as a nitrogenous fertilizer or as organic matrix, both at the reimplantation moment or in a following operation.

Alternatively, each breeding or seedling can be arranged at a desired place together with the cell therefor, which will represent, in the time, its nutrient element source and, more specifically, its nitrogen source, thereby reducing the requirement of specifically feeding fertilizers.

In fact, methylen-urea is used in agriculture as a fertilizer slowly releasing nitrogen.

In the meanwhile, in the case of a sowing vessel or tray formed by a wood-like matrix, a fiber or shaving material, the cell of each bedder or seedling will constitute, in the time, a stable humus source.

Moreover, said methylen-urea can form the overall sowing vessel or tray, or it can be added with mineral elements and/or organic matrix assemblies.

The mineral components can comprise: mineral fertilizers, zeolytes, rock wool, pozzolan, pumice, vermiculite, perlite, foamed clay, bentonite, and mixtures thereof in all the desired proportions.

The suitable organic matrix assemblies can comprise: textile fibers, sawdust, wood fibers and by-products of panel industries, cellulose and by-products of paper shops, coconut fibers, barks, cork, cereal straw, rice husk, sunflower seed envelopes, bagasse, wood waste and mixtures thereof in all the desired proportions.

### DESCRIPTION OF THE PREFERRED EMBODIMENTS

One of the preferred embodiments of the invention comprises a sowing vessel or tray having a parallelepiped shape, of 520/580 mm (length) x 320/330 mm (width) x 50/70 mm (height) with a number of cells from 24 (6 x 4) to 680 (34 x 20).

The different cell number will correspond to the agronomic requirements of a lot of different vegetable species, which can be cultured in the sowing vessels or trays according to the present invention.

For that same reason, the cells can be closed or open at their bottom portion, with different size holes, depending on the agronomic requirements of the cultured vegetable species and on the breeding procedures.

A second embodiment of the invention comprises a sowing vessel in the form of a tray with raised edges or rims, in other words free of separating or diaphragm elements which in the first embodiment will divide the inner space into cells.

In this case, the size will be of 520/580 mm (length) x 320/330 mm (width) x 65/80 mm (outer height) and 50/65 mm (internally measured height).

Also in this case, the sowing vessel can be either provided or not with holes on its bottom.

A third embodiment, finally, comprise a flat tray, devoid of raised rim edges, on which the culture substrate is simply rested, and having preferably a size of 520/580 mm (length) x 320/330 mm (width) x 15/100 mm (height).

Even in this case the bottom of the sowing vessel can be provided or not with holes.

The sowing vessel according to the present invention provides a very high number of advantages with respect to the prior art.

At first, the use of a sowing vessel made of a fully biodegradable material overcomes the problems related to its post-service managing: collection, handling and sending to a disposal off place, or to a thermodestruction or reuse process after an hygienization thereof, where possible.

The subject sowing vessel, in addition to being biodegradable, provides, in its post-service operation, an important use function, since it can be fully or mainly constituted by a fertilizer adapted to slowly release nitrogen, with a great advantage for the culture, whereas, in the case in which also the wood-matrix is present, this latter will provide an emending function, since the biodegradation of lignine will cause high agronomic quality stable humus to be formed.

Possible mineral co-formulated materials or organic matrix assemblies will complete the activity of the methylen-urea, with a complementary fertilizing and/emending function.

The sowing vessel according to the present invention allows to greatly simplify and automatize the reimplantation operations, since the vessel or tray must not be held intact, but can be directly crushed on the field and distributed through the soil, as any nitrogenous fertilizer.

The following examples are provided only by way of an illustrative example of the present invention, and they must not be considered in a sense limiting the inventive scope, as it is defined by the enclosed claims.

### Example 1

1,000 g of methylen-urea, with a molar ratio U:F = 1:0.7 and a dry residue of 65 % are mixed with 20.0 g of phosphoric acid at 15 %.

After a quick homogenization, the mixture is poured into molds of a suitable size.

The finished articles of manufactures have a density of 1.35 kg/dm³.

### Example 2

1,000 g of methylen-urea, with a molar ratio U:F = 1:0.9 and a dry residue of 50 % are mixed with 50 g of a mineral water soluble fertilizer having a titre N,P,K = 12.61.0.

Upon dissolving, 10.0 g 15 % phosphoric acid are added.

After homogenizing, the mixture is poured into molds of a suitable size.

The finished articles of manufactures have a density of 1.5 kg/dm³.

### Example 3

1,000 g of methylen-urea, with a molar ratio U:F = 1:1 and a dry residue of 65 % are forcibly mixed with 30.0 g 10 % formic acid.

During the mixing, a soft "mud" curing in few minutes is formed.

The density of the obtained material is 0.5 kg/dm³.

### Example 4

1,000 g of methylen-urea, with a molar ratio U:F = 1:0.8 and a dry residue of 50 % are mixed with 50.0 g of a wood fiber. The mixture is catalyzed by 50.0 g of 30 % ammonium sulphate and poured into the mold.

The density of the obtained material is 1.4 kg/dm³.

### Example 5

1,000 g of methylen-urea, with a molar ratio U:F = 1:1 and a dry residue of 60 % are mixed with 200 g urea (nitrogenous fertilizer with a titre N,P,K = 46.0.0).

Upon dissolving urea and adding 30.0 g of 15% phosphoric acid, the homogenized mixture is poured into molds of a suitable size.

The finished articles of manufacture have a density of 1.25 kg/dm³.

### Example 6

1,000 g of a wood fiber, dried to a residue moisture of 2 ÷ 3 % are resin processed with 460 g of a glueing mixture having the following composition:
- 380 g of methylen-urea with a molar ratio U:F = 1:0.9 and a dry residue of 65%;
- 40 g water;
- 40 g of a 30 % ammonium sulphate solution.

The dry residue of the mixture is 56.3 %.

Then, the fiber is hot formed and pressed so as to provide a panel having an end density of 0.40 kg/dm³.

### Example 7

1,000 g of wood shavings, dried to a residue moisture of 1 ÷ 2 % are resin processed with 360 g of a glueing mixture having the following composition:
- 303 g of methylen-urea with a molar ratio U:F = 1:1 and a dry residue of 66%;
- 30 g water;
- 27 g of a 30 % ammonium sulphate solution.

The dry residue of the mixture is 57.8 %.

Then, the shavings are hot formed and pressed so as to provide a panel having an end density of 0.45 kg/dm³.

It has been found that the invention fully achieves the intended aim and objects.

In fact, the invention provides a sowing vessel or tray made of a fully biodegradable material, overcoming all the problems related to its post-operating managing such as: collection, handling and disposal-off or its thermodestruction or optional reuse.

In practicing the invention, the used materials, as well as the contingent size and shapes, can be any, depending on requirements and the status of the art.

## Claims

1. A sowing vessel of a fully biodegradable material comprising a slowly nitrogen releasing fertilizer, which material, at the end of its useful life, can be crushed so that said crushed fertilizing material will provide a soil crushed biodegradable fertilizer, **characterized in that** said fertilizing material comprises methylen-urea with an urea: formaldehyde molar ratio from 1:0.5 to 1:1.5, preferably from 1:0.55 to 1:0.85 and a dry residue from 30 to 80% by weight of said vessel, and **in that** said methylen-urea comprises from 50 to 99% by weight of said sowing vessel, preferably from 85 to 95%.

2. A sowing vessel, according to claim 1, **characterized in that** said sowing vessel further comprises mineral co-formulating compounds or organic matrix assemblies integrating the activity of said methylen-urea, with a complementary fertilizing and/or emending action.

3. A sowing vessel, according to claim 1, **characterized in that** said sowing vessel further comprises natural organic additives, mineral or synthesis additives or mixtures thereof.

4. A sowing vessel, according to claim 3, **characterized in that** said organic additives comprise vegetable meals, starches, textile fibers, sawdust, wood fibers, by-products of the panel industry, cellulose and paper-shop byproducts, coconut, fiber, barks, cork, cereal straw, rice husk, sunflower seed envelopes, bagasse, woos waste and mixtures thereof.

5. A sowing vessel, according to claim 3, **characterized in that** said mineral origin compounds comprise mineral fertilizers, NPK, NP, NK, N, P and K, zeolites, rock wool, pozzolan, pumice, vermiculite, perlite, foamed clay, bentonite, and mixtures thereof.

6. A sowing vessel, according to claim 1, **characterized in that** said sowing vessel further comprises synthesis additives including polyvinyl alcohol, hydroxyethylcellulose, hydroxymethylcellulose and mixtures thereof.

7. A sowing vessel, according to claim 6, **characterized in that** said synthesis additives comprises from 0 to 50% by weight of said sowing vessel, preferably from 0 to 20% by weight.

8. A sowing vessel, according to claim 4, **characterized in that** said wood fibers comprise from 50 to 90% by weight of said sowing vessel, preferably from 70 to 85% by weight.

9. A sowing vessel, according to claim 8, **characterized in that** said wood fibers are bound by binding methylen-urea.

10. A sowing vessel, according to claim 9, **characterized in that** said binding methylen-urea comprises from 10 to 45% by weight of said sowing vessel, preferably from 15 to 35% by weight.

11. A sowing vessel, according to claim 1, **characterized in that** said material has a density from 10 to 2,000 g/dm³, preferably from 200 to 1,000 g/dm³.

12. A sowing vessel, according to claim 1, **characterized in that** said sowing vessel has a parallelepipedal configuration, having a size of 520/580 mm in length, x 320/330 mm in width, x 50/70 mm in height, with a number of cells from 24.6 x 4 and 680, 34 x 20, said cells having either a closed or open bottom and including a plurality of different size holes.

13. A sowing vessel, according to claim 1, **characterized in that** said sowing vessel has a tray configuration with cell defining raised rims, said tray having a length of 520/580 mm, a width of 320/330 mm, an outer height of 65/80 mm, and an inner height of 50/65 mm, said sowing vessel having a perforated bottom.

14. A sowing vessel, according to claim 1, **characterized in that** said sowing vessel has a flat tray configuration thereon a culture substrate is carried, and has a size of 520/580 mm in length, x 320/330 mm in width, x 15/100 mm in height, said sowing vessel having a perforated bottom.

15. A method for making a sowing vessel according to claim 1, comprising the step of molding methylen-urea and a catalyzer in a mold, said methylen-urea having an urea: formaldehyde molar ratio from 1:0.5 to 1:1.5, preferably from 1:0.55 to 1:0.85, a dry residue from 30 + to 80% by weight, and that said methylen-urea comprises from 50 to 99% by weight of said sowing vessel, preferably from 85 to 95%.

16. A method, according to claim 15, **characterized in that** said method comprises the further step of adding to said methylen-urea a catalyzer selected from formic acid in a concentration from 5 to 50%, preferably from 10 to 25%, ammonium sulphate in a concentration from 10 to 40%, preferably from 25 to 35%, water soluble mono-ammoniumphosphate (MAP) in a concentration from 5 to 20%, preferably from 10 to 15%, water soluble diammoniumphosphate (DAP) in a concentration from 10 to 40%, preferably from 20 to 40%, phosphoric acid in a concentration from 5 to 50%, preferably from 10 to 25%, sulphuric acid in a concentration from 50 to 30%, preferably from 10 to 20%, and mixtures thereof.

17. A method, according to claim 15, **characterized in that** said catalyzer comprises from 0.1 to 20% by weight of said sowing vessel, preferably from 1 to 10% by weight.

18. A method, according to claim 15, **characterized by** the step of adding to said methylen-urea organic vegetable meals, starches, textile fibers, sawdust, wood fiber, by-products of the panel industry, cellulose and paper-shop by-products, coconut fiber, barks, cork, cereal straw, rice husk, sunflower seed envelopes, bagasse, wood waste and mixtures thereof.

19. A method, according to claim 15, **characterized by** the step of further adding to said methylen-urea mineral fertilizers, NPK, NP, NK, N, P and K, zeolites, rock wool, pozzolan, pumice, vermiculite, perlite, foamed clay, bentonite, and mixtures thereof.

20. A method, according to claim 15, **characterized in that** said synthesis additive comprises: polyvinyl alcohol, hydroxyethyl-cellulose, hydroxymethylcellulose and mixtures thereof in all the desired proportions.

21. A method, according to claim 20, **characterized in that** said synthesis additives comprise from 0 to 50% by weight of said sowing vessel, preferably from 0 to 20% by weight thereof.

22. A method, according to claim 18, **characterized in that** said wood fibers comprise from 50 to 90% by weight of said sowing vessel, preferably from 70 to 85% by weight.

23. A method, according to claim 15, **characterized in that** said catalyzer comprises from 1 to 10% by weight of said sowing vessel, preferably from 2 to 5% by weight.

## Patentansprüche

1. Behälter zum Säen eines vollständig biologisch abbaubaren Materials, das einen langsam Stickstoff freisetzenden Dünger umfasst, wobei das Material am Ende seiner Nutzungsdauer so zerkleinert sein kann, dass das zerkleinerte Düngungsmaterial einen zerkleinerten, biologisch abbaubaren Bodendünger bereitstellt, **dadurch gekennzeichnet, dass** das Düngungsmaterial Methylen-Harnstoff mit einem Molverhältnis Harnstoff:Formaldehyd von 1:0,5 bis 1:1,5 umfasst, vorzugsweise von 1:0,55 bis 1:0,85, und einem Trockenrückstand von 30 bis 80 Gewichtsprozent des Behälters, und dass der Methylen-Harnstoff 50 bis 99 Gewichtsprozent des Behälters zum Säen umfasst, vorzugsweise 85 bis 95%.

2. Behälter zum Säen nach Anspruch 1, **dadurch gekennzeichnet, dass** der Behälter zum Säen des Weiteren Mineral-Co-Formulierungsverbindungen oder organische Matrixanordnungen umfasst, die die Aktivität des Methylen-Harnstoffs, mit einer komplementären düngenden und/oder verbessernden Wirkung integrieren.

3. Behälter zum Säen nach Anspruch 1, **dadurch gekennzeichnet, dass** der Behälter zum Säen des Weiteren natürliche organische Zusatzstoffe, mineralische oder synthetische Zusatzstoffe oder Gemische davon umfasst.

4. Behälter zum Säen nach Anspruch 3, **dadurch gekennzeichnet, dass** die organischen Zusatzstoffe Pflanzenmehle, Stärken, Textilfasern, Sägestaub, Holzfasern, Nebenprodukte der Plattenindustrie, Zellulose- und Papiernebenprodukte, Kokosnussfaser, Rinden, Kork, Getreidestroh, Reishülsen, Sonnenblumensamenhüllen, Bagasse, Holzabfall und Gemische davon umfassen.

5. Behälter zum Säen nach Anspruch 3, **dadurch gekennzeichnet, dass** die Verbindungen mineralischen Ursprungs mineralische Dünger, NPK, NP, NK, N, P und K, Zeolithe, Gesteinswolle, Puzzolan, Bimsstein, Vermikulit, Perlit, Schaumton, Bentonit und Gemische davon umfassen.

6. Behälter zum Säen nach Anspruch 1, **dadurch gekennzeichnet, dass** der Behälter zum Säen des Weiteren synthetische Zusatzstoffe umfasst, einschließlich Polyvinylalkohol, Hydroxyethylzellulose, Hydroxymethylzellulose und Gemische davon.

7. Behälter zum Säen nach Anspruch 6, **dadurch gekennzeichnet, dass** die synthetischen Zusatzstoffe 0 bis 50 Gewichtsprozent des Behälters zum Säen, vorzugsweise 0 bis 20 Gewichtsprozent umfassen.

8. Behälter zum Säen nach Anspruch 4, **dadurch gekennzeichnet, dass** die Holzfasern 50 bis 90 Gewichtsprozent des Behälters zum Säen, vorzugsweise 70 bis 85 Gewichtsprozent umfassen.

9. Behälter zum Säen nach Anspruch 8, **dadurch gekennzeichnet, dass** die Holzfasern durch bindenden Methylen-Harnstoff gebunden sind.

10. Behälter zum Säen nach Anspruch 9, **dadurch gekennzeichnet, dass** der bindende Methylen-Harnstoff 10 bis 45 Gewichtsprozent des Behälters zum Säen, vorzugsweise 15 bis 35 Gewichtsprozent umfasst.

11. Behälter zum Säen nach Anspruch 1, **dadurch gekennzeichnet, dass** das Material eine Dichte von 10 bis 2000 g/dm³, vorzugsweise 200 bis 1000 g/dm³ aufweist.

12. Behälter zum Säen nach Anspruch 1, **dadurch gekennzeichnet, dass** der Behälter zum Säen eine parallelflache Konfiguration aufweist, mit einer Größe von 520/580 mm Länge x 320/330 mm Breite x 50/70 mm Höhe, mit einer Anzahl von Zellen von 24.6 x 4 und 680, 34 x 20, wobei die Zellen entweder einen geschlossenen oder offenen Boden aufweisen und mehrere verschieden große Löcher enthalten.

13. Behälter zum Säen nach Anspruch 1, **dadurch gekennzeichnet, dass** der Behälter zum Säen eine Schalenkonfiguration aufweist, mit Zellen definierenden erhöhten Rändern, wobei die Schale eine Länge von 520/580 mm, eine Breite von 320/330 mm, eine äußere Höhe von 65/80 mm und eine innere Höhe von 50/65 mm aufweist, wobei der Behälter zum Säen einen perforierten Boden hat.

14. Behälter zum Säen nach Anspruch 1, **dadurch gekennzeichnet, dass** der Behälter zum Säen eine flache Schalenkonfiguration aufweist, die ein Kultursubstrat trägt, und eine Größe von 520/580 mm Länge x 320/330 mm Breite x 15/100 mm Höhe aufweist, wobei der Behälter zum Säen einen perforierten Boden hat.

15. Verfahren zur Herstellung eines Behälters zum Säen nach Anspruch 1, umfassend den Schritt des Formens von Methylen-Harnstoff und eines Katalysators in einer Form, wobei der Methylen-Harnstoff ein Molverhältnis Harnstoff:Formaldehyd von 1:0,5 bis 1:1,5 aufweist, vorzugsweise von 1:0,55 bis 1:0,85, und einen Trockenrückstand von 30 bis 80 Gewichtsprozent, wobei der Methylen-Harnstoff 50 bis 99 Gewichtsprozent des Behälters zum Säen umfasst, vorzugsweise 85 bis 95%.

16. Verfahren nach Anspruch 15, **dadurch gekennzeichnet, dass** das Verfahren des weiteren Schritt des Zugebens eines Katalysators zu dem Methylen-Harnstoff umfasst, der ausgewählt ist aus Ameisensäure in einer Konzentration von 5 bis 50%, vorzugsweise 10 bis 25%, Ammoniumsulfat in einer Konzentration von 10 bis 40%, vorzugsweise 25 bis 35%, wasserlöslichem Mono-Ammoniumphosphat (MAP) in einer Konzentration von 5 bis 20%, vorzugsweise 10 bis 15%, wasserlöslichem Diammoniumphosphat (DAP) in einer Konzentration von 10 bis 40%, vorzugsweise 20 bis 40%, Phosphorsäure in einer Konzentration von 5 bis 50%, vorzugsweise 10 bis 25%, Schwefelsäure in einer Konzentration von 50 bis 30%, vorzugsweise 10 bis 20%, und Gemischen davon.

17. Verfahren nach Anspruch 15, **dadurch gekennzeichnet, dass** der Katalysator 0,1 bis 20 Gewichtsprozent des Behälters zum Säen, vorzugsweise 1 bis 10 Gewichtsprozent umfasst.

18. Verfahren nach Anspruch 15, **gekennzeichnet durch** den Schritt des Zugebens von organischen Pflanzenmehlen, Stärken, Textilfasern, Sägestaub, Holzfasern, Nebenprodukten der Plattenindustrie, Zellulose- und Papiernebenprodukten, Kokosnussfaser, Rinden, Kork, Getreidestroh, Reishülsen, Sonnenblumensamenhüllen, Bagasse, Holzabfall und Gemischen davon zu dem Methylen-Harnstoff.

19. Verfahren nach Anspruch 15, **gekennzeichnet durch** den Schritt des weiteren Zugebens von mineralischen Düngern, NPK, NP, NK, N, P und K, Zeolithen, Gesteinswolle, Puzzolan, Bimsstein, Vermikulit, Perlit, Schaumton, Bentonit und Gemischen davon zu dem Methylen-Harnstoff.

20. Verfahren nach Anspruch 15, **dadurch gekennzeichnet, dass** der synthetische Zusatzstoff umfasst: Polyvinylalkohol, Hydroxyethylzellulose, Hydroxymethylzellulose und Gemische davon, in allen gewünschten Anteilen.

21. Verfahren nach Anspruch 20, **dadurch gekennzeichnet, dass** die synthetischen Zusatzstoffe 0 bis 50 Gewichtsprozent des Behälters zum Säen, vorzugsweise 0 bis 20 Gewichtsprozent davon umfassen.

22. Verfahren nach Anspruch 18, **dadurch gekennzeichnet, dass** die Holzfasern 50 bis 90 Gewichtsprozent des Behälters zum Säen, vorzugsweise 70 bis 85 Gewichtsprozent umfassen.

23. Verfahren nach Anspruch 15, **dadurch gekennzeichnet, dass** der Katalysator 1 bis 10 Gewichtsprozent des Behälters zum Säen, vorzugsweise 2 bis 5 Gewichtsprozent umfasst.

## Revendications

1. Récipient pour semis composé d'un matériau totalement biodégradable comprenant un fertilisant libérant lentement de l'azote, lequel matériau à la fin de sa durée de vie peut être écrasé de telle sorte que le matériau fertilisant écrasé fournira du fertilisant biodégradable écrasé pour le sol, **caractérisé en ce que** ledit matériau fertilisant comprend méthylène-urée avec un rapport molaire urée-formaldéhyde compris entre 1/0,5 et 1/1,5, de préférence compris entre 1/0,55 et 1/0,85 et un résidu sec compris entre 30 et 80 % en poids dudit récipient, et **en ce que** ladite méthylène-urée constitue entre 50 et 99 % en poids dudit récipient pour semis, de préférence entre 85 et 95 %.

2. Récipient pour semis selon la revendication 1, **caractérisé en ce que** ledit récipient pour semis comprend en outre des composés de coformulation minéraux ou des ensembles de matrice organique intégrant l'activité de ladite méthylène-urée avec une action supplémentaire fertilisante et/ou amendante.

3. Récipient pour semis selon la revendication 1, **caractérisé en ce que** ledit récipient pour semis comprend en outre des additifs organiques naturels, des minéraux ou des additifs de synthèse ou des mélanges de ceux-ci.

4. Récipient pour semis, selon la revendication 3, **caractérisé en ce que** lesdits additifs organiques comprennent des farines de légume, des amidons, des fibres textiles, de la sciure de bois, des fibres de bois, des sous-produits de l'industrie des panneaux de remplissage, des sous-produits de cellulose et de papeterie, des fibres de noix de coco, des écorces, du liège, de la paille de céréale, de la balle de riz, des enveloppes de graine de tournesol, de la bagasse, des déchets de bois et des mélanges de ceux-ci.

5. Récipient pour semis, selon la revendication 3, **caractérisé en ce que** les composés d'origine minérale comprennent des fertilisants minéraux, NPK, NP, NK, N, P et K, des zéolites, de la laine de roche, de la pouzzolane, de la pierre ponce, de la vermiculite, de la perlite, de l'argile mousse, de la bentonite, et des mélanges de ceux-ci.

6. Récipient pour semis, selon la revendication 1, **caractérisé en ce que** ledit récipient pour semis comprend en outre des additifs de synthèse incluant l'alcool polyvinylique, l'hydroxyéthylcellulose, l'hydroxyméthylcellulose et les mélanges de ceux-ci.

7. Récipient pour semis selon la revendication 6, **caractérisé en ce que** lesdits additifs de synthèse constituent entre 0 et 50 % en poids dudit récipient pour semis, de préférence entre 0 et 20 % en poids.

8. Récipient pour semis selon la revendication 4, **caractérisé en ce que** lesdites fibres de bois constituent entre 50 et 90 % en poids dudit récipient pour semis, de préférence entre 70 et 85 % en poids.

9. Récipient pour semis selon la revendication 8, **caractérisé en ce que** lesdites fibres de bois sont liées par la méthylène-urée de liaison.

10. Récipient pour semis selon la revendication 9, **caractérisé en ce que** ladite méthylène-urée de liaison comprend entre 10 et 45 % en poids dudit récipient pour semis, de préférence entre 15 et 35 % en poids.

11. Récipient pour semis selon la revendication 1, **caractérisé en ce que** ledit matériau a une densité comprise entre 10 et 2 000 g/dm³, de préférence de 200 à 1 000 g/dm³.

12. Récipient pour semis selon la revendication 1, **caractérisé en ce que** ledit récipient pour semis a une configuration parallélépipédique, présente une dimension de 520/580 mm en longueur x 320/330 mm en largeur et x 50/70 mm en hauteur, avec un nombre de cellules compris entre 24,6 x 4 et 680, 34 x 20, lesdites cellules ayant soit un fond fermé soit un fond ouvert, et incluant une pluralité de trous de différentes tailles.

13. Récipient pour semis selon la revendication 1, **caractérisé en ce que** ledit récipient pour semis a une configuration en plateau avec des bords relevés qui définissent des cellules, ledit plateau ayant une longueur de 520/580 mm, une largeur de 320/330 mm, une hauteur extérieure de 65/80 mm, et une hauteur intérieure de 50/65 mm, ledit récipient pour semis ayant un fond perforé.

14. Récipient pour semis selon la revendication 1, **caractérisé en ce que** ledit récipient pour semis a une configuration de plateau plat sur lequel un substrat de culture est étalé, et présente des dimensions de 520/580 mm en longueur, x 320/330 mm en largeur, x 15/100 mm en hauteur, ledit récipient pour semis ayant un fond perforé.

15. Procédé permettant de constituer un récipient pour semis selon la revendication 1, comprenant l'étape de moulage de la méthylène-urée et un catalyseur dans un moule, ladite méthylène-urée ayant un rapport molaire urée/formaldéhyde compris entre 1/0,5 et 1/1,5, de préférence compris entre 1/0,55 et 1/0,85, un résidu sec compris entre 30 et 80 % en poids, et en ce que ladite méthylène-urée comprend entre 50 et 99 % en poids dudit récipient pour semis, de préférence compris entre 85 et 95 %.

16. Procédé selon la revendication 15, **caractérisé en ce que** ledit procédé comprend l'étape supplémentaire d'ajout à ladite méthylène-urée d'un catalyseur choisi parmi l'acide formique en une concentration comprise entre 5 et 50 %, de préférence entre 10 et 25 %, du sulfate d'ammonium en une concentration comprise entre 10 et 40 %, de préférence entre 25 et 35 %, du monophosphate d'ammonium soluble dans l'eau (MAP) en une concentration comprise entre 5 et 20 %, de préférence entre 10 et 15 %, du diphosphate d'ammonium soluble dans l'eau (DAP) en une concentration comprise entre 10 et 40 %, de préférence comprise entre 20 et 40 %, de l'acide phosphorique en une concentration comprise entre 5 et 50 %, de préférence entre 10 et 25 %, de l'acide sulfurique en une concentration comprise entre 50 et 30 %, de préférence entre 10 et 20 %, et des mélanges de ceux-ci.

17. Procédé selon la revendication 15, **caractérisé en ce que** ledit catalyseur constitue entre 0,1 et 20 % en poids dudit récipient pour semis, de préférence entre 1 et 10 % en poids.

18. Procédé selon la revendication 15, **caractérisé par** l'étape de l'ajout à ladite méthylène-urée des farines de légume organique, des amidons, des fibres textiles, de la sciure de bois, de la fibre de bois, des sous-produits de l'industrie des panneaux de remplissage, des sous-produits de cellulose et de papeterie, de la fibre de noix de coco, des écorces, du liège, de la paille de céréale, de la balle de riz, des enveloppes de graines de tournesol, de la bagasse, des déchets de bois et des mélanges de ceux-ci.

19. Procédé selon la revendication 15, **caractérisé par** l'étape d'un ajout complémentaire à ladite méthylène-urée de fertilisants minéraux, NPK, NP, NK, N, P et K, de zéolites, de laine de verre, de pouzzolane, de pierre ponce, de vermiculite, de perlite, d'argile alluvionnaire, de bentonite et des mélanges de ceux-ci.

20. Procédé selon la revendication 15, **caractérisé en ce que** ledit additif de synthèse comprend : de l'alcool polyvinylique, de l'hydroxyéthylcellulose, de l'hydroxyméthylcellulose et des mélanges de ceux-ci dans toutes les proportions souhaitées.

21. Procédé selon la revendication 20, **caractérisé en ce que** lesdits additifs de synthèse constituent entre 0 et 50 % en poids dudit récipient pour semis, de préférence entre 0 et 20 % en poids de celui-ci.

22. Procédé selon la revendication 18, **caractérisé en ce que** lesdites fibres de verre constituent entre 50 et 90 % en poids dudit récipient pour semis, de préférence entre 70 et 85 % en poids.

23. Procédé selon la revendication 15, **caractérisé en ce que** ledit catalyseur constitue entre 1 et 10 % en poids dudit récipient pour semis, de préférence compris 2 et 5 % en poids.
